# EUROPEAN PATENT SPECIFICATION

(11) **EP 1 891 126 B1**
(45) Date of publication and mention of the grant of the patent: **05.09.2012**
(21) Application number: 06724624.9
(22) Date of filing: 27.04.2006
(51) Int. Cl.: C08F 220/00, C04B 24/00

(54) **CONCRETE AND MORTAR ADMIXTURE**
BETON- UND MÖRTELZUSATZSTOFF
MELANGE DE BETON ET DE MORTIER

(30) Priority: 15.06.2005 EP 05012867
(43) Date of publication of application: 27.02.2008
(73) Proprietor: KAO CHEMICALS GmbH, 46446 Emmerich (DE)
(72) Inventor: IZUMI, Tatsuo, c/o Kao Chemicals GmbH, 46446 Emmerich (DE); ZANDERS, Carsten, c/o Kao Chemicals GmbH, 46446 Emmerich (DE); JANSEN-BOCKTING, Marion, c/o Kao Chemicals GmbH, 46446 Emmerich (DE); DIKTY, Stefan, c/o Kao Chemicals GmbH, 46446 Emmerich (DE)
(74) Representative: HOFFMANN EITLE
(86) International application number: PCT/EP2006/003951
(87) International publication number: WO 2006/133762

(56) References cited:
- WO-A-95/16643

## Description

### Technical field

The present invention relates to a concrete and/or mortar admixture. More specifically, it relates to a concrete and/or mortar admixture that allows optimal flowability and, at the same time, can maintain a specific consistency, fluidity and workability of the concrete independently of the cement type.

### Prior Art

### Cement

Portland cement, the fundamental ingredient in concrete and/ mortar is calcium silicate cement made with a combination of calcium, silicon, aluminium, and iron.

Different types of portland cement are manufactured to meet various physical and chemical requirements. The American Society for Testing and Materials (ASTM) Specification C-150 provides for eight types of portland cement and uses Roman numeral designations as follows:
- Type I Normal
- Type IA Normal, air-entraining
- Type II Moderate sulphate resistance
- Type IIA Moderate sulphate resistance, air-entraining
- Type III High early strength
- Type IIIA High early strength, air-entraining
- Type IV Low heat of hydration
- Type V High sulphate resistance

Also according to European Standard Norm EN 197-1 there are 5 main cement types:
- CEM I Portland cement: comprising Portland cement and up to 5% of minor additional constituents
- CEM II Portland-composite cement: comprising Portland cement and up to 35% of other single constituents
- CEM III Blast furnace cement: comprising Portland cement and higher percentages of blast furnace slag
- CEM IV Pozzolanic cement: comprising Portland cement and higher percentages of pozzolan
- CEM V Composite cement: comprising Portland cement and higher percentages of blast furnace slag and pozzolan or fly ash

Said main cement types can be divided in sub-types depending on the second constituent of the cement, which can be blast-furnace slag, silica fume, natural pozzolan, natural calcined pozzolan, siliceous fly ash (e.g. pulverised fuel ash), calcareous fly ash (e.g. high-lime fly ash), limestone, burnt shale or mixtures thereof.

In addition to the different types of portland cement, a number of special purpose hydraulic cements are manufactured. Among these is white portland cement. White portland cement is identical to grey portland cement except in colour. During the manufacturing process, manufacturers select raw materials that contain only negligible amounts of iron and magnesium oxides, the substances that give grey cement its colour. White cement is used whenever architectural considerations specify white or coloured concrete or mortar.

Blended hydraulic cements are produced by intimately blending two or more types of cementations material. Primary blending materials are portland cement and pozzolans, like ground granulated blast-furnace slag (by-product of steel production in steel blast-furnaces), fly ash (by-product of burning coal), silica fume lime stone and natural pozzolans.

Pozzolans (puzzolans) are strictly volcanic tuffs of the type found near Pozzuoli in southern Italy, which in conjunction with lime were used by the ancient Romans in the mortars employed in many of their buildings. In concrete mix design the term pozzolan is used to describe a powdered material, which when added to the cement in a concrete mix reacts with the lime released by the hydration of the cement to create compounds, which improve the strength or other properties of the concrete.

Blended hydraulic cements conform to the requirements of ASTM C-1157, ASTM C-595 or EN 197-1 (CEM II, CEM III, CEM IV and CEM V).

Blended hydraulic cements are commonly used in the same manner as portland cements. However, due to environmental protection (carbon dioxide elimination requirements under the Kyoto Protocol), the use of blended (hydraulic) cement by the construction industry is becoming increasingly important.

Due to the fact that cement is produced in a cement kiln that burns limestone, clay and a variety of other minerals at about 1400°C, approximately 1 to 3 tons of carbon dioxide is produced for every ton of cement. Cement manufacturing accounts for approximately 5-15% of total world carbon dioxide production.

The benefits of blended (hydraulic) cement are significant. For example, when pozzolans are mixed with cement the amount of the mix almost directly replaces the amount of carbon dioxide produced in the cement clinker process. For example, a 50% fly ash blend or mix replaces 0.5 ton of carbon dioxide for every ton of cement used.

Finally, expansive cements are hydraulic cements that expand slightly during the early hardening period after setting.

### Mortar

Mortar is a masonry product composed of cement and sand, generally with a grain size of less than 4 mm (sometimes less than 8 mm, e. g. mortar for special decorative renders or floor screed mortar). When water is mixed in with mortar, its binding element, the cement, is activated. Distinguish mortar from "concrete," which acts in a similar way but which contains coarse aggregate which is bound together by the cement. Concrete can stand alone, while mortar is used to hold brick or stone together.

### Concrete

In its simplest form, concrete is a mixture of paste and aggregates. The paste, composed of cement and water, coats the surface of the fine and coarse aggregates. Through a chemical reaction called hydration, the paste hardens and gains strength to form the rock-like mass known as concrete.

Within this process lies the key to a remarkable trait of concrete: it is plastic and malleable when newly mixed, strong and durable when hardened.

The key to achieving a strong, durable concrete rests in the careful proportioning and mixing of the ingredients. A concrete mixture that does not have enough paste to fill all the voids between the aggregates will be difficult to place and will produce rough, honeycombed surfaces and porous concrete. A mixture with an excess of cement paste will be easy to place and will produce a smooth surface; however, the resulting concrete is likely to shrink more and be uneconomical.

A properly designed concrete mixture will possess the desired workability for the fresh concrete and the required durability and strength for the hardened concrete. Typically, a mix is about 10 to 15 weight % cement, 60 to 75 weight % aggregate and 15 to 20 weight % water. Entrained air in many concrete mixes may also take up another 5 to 8 weight %.

### Admixtures

Admixtures are the ingredients in concrete other than cement, water, and aggregate that are added to the mix immediately before or during mixing. Admixtures mostly chemically interact with the constituents of concrete and affect the properties and characteristics of the fresh and hardened concrete and its durability.

Admixtures, which mostly chemically interact with the constituents of concrete, are used primarily to reduce the cost of concrete construction; to modify the properties of hardened concrete; to ensure the quality of concrete during mixing, transporting, placing, and curing; and to overcome certain emergencies during concrete operations.

The effectiveness of an admixture depends on several factors including: type and amount of cement, water content, mixing time, slump, and temperatures of the concrete and air. Most organic chemical type admixtures are affected by cement type and brand, water cement ration, aggregate grading and temperature.

Admixtures are classed according to function. There are five distinct classes of chemical admixtures: air-entraining, water-reducing, retarding, accelerating, and plasticizers (superplasticizers). All other varieties of admixtures fall into the specialty category whose functions include corrosion inhibition, shrinkage reduction, alkali-silica reactivity reduction, workability enhancement, bonding, damp proofing, and colouring.

Water-reducing admixtures usually reduce the required water content for a concrete mixture by about 5 to 10 %. Consequently, concrete containing a water-reducing admixture needs less water to reach a required slump than untreated concrete: The treated concrete can have a lower water-cement ratio. This usually indicates that a higher strength concrete can be produced without increasing the amount of cement.

Retarding admixtures, which slow the setting rate of concrete, are used to counteract the accelerating effect of hot weather on concrete setting. High temperatures often cause an increased rate of hardening, which makes placing and finishing difficult. Retarders keep concrete workable during placement and delay the initial set of concrete. Most retarders also function as water reducers and may entrain some air in concrete.

Accelerating admixtures increase the rate of early strength development; reduce the time required for proper curing and protection, and speed up the start of finishing operations. Accelerating admixtures are especially useful for modifying the properties of concrete in cold weather.

Superplasticizers, also known as plasticizers or high-range water reducers (HRWR), reduce water content by 12 to 30 % and can be added to concrete with a low-to-normal slump and water-cement ratio to make high-slump flowing concrete. Flowing concrete is a highly fluid but workable concrete that can be placed with little or no vibration or compaction. Normally, the effect of superplasticizers lasts only 30 to 60 minutes, depending on the type and dosage rate, and is followed by a rapid loss in workability. As a result of the slump loss (problematic retention of fluidity), superplasticizers are usually added to concrete at the jobsite.

There are a great variety of superplasticizers described in the state of the art. Examples thereof include salts of naphthalenesulfonic acid/formaldehyde condensates (naphthalene derivatives), salts of melaminesulfonic acid/formaldehyde condensates (melamine derivatives), salts of sulfanilic acid/phenol formaldehyde co-condensates (aminosulfonic acid derivatives), polycarboxylate-based superplasticizers, polyether-based superplasticizers and so on.

Polycarboxylate-based superplasticizers (PC) have carboxyl units and ethylene oxide polymer units as the side chains, having a chemical structure according to formula (a) 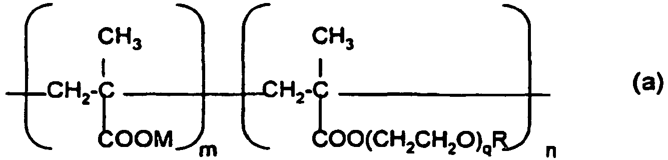 wherein q=10-30

Polyether-based superplasticizers (PE) have main chains with carboxyl groups and very long side chains of ethylene oxide polymer units, having a chemical structure according to formula (b) 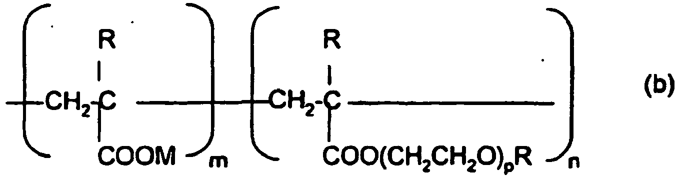 wherein p≥110.

Each of these admixtures has some problems even though each has excellent functions.

Other type of superplasticizers are described in the international patent application WO A-9748656, disclosing a concrete admixture, which comprises a copolymer comprising, as structural units, units derived from an ethylenically unsaturated monomer (a) having 25 to 300 moles of C₂-C₃ oxyalkylene groups per mole of copolymer and units derived from a monomer (b) of an alkyl, alkenyl or hydroxyalkyl ester of an ethylenically unsaturated mono- or di-carboxylic acid. Said copolymer may further contain units derived from a monomer (c) as structural units. The monomer (c) is an ethylenically unsaturated monocarboxylic acid or a salt thereof, or an ethylenically unsaturated dicarboxylic acid or an anhydride or salt thereof. In the case wherein the copolymer contains the monomer unit (c), the proportions of the units (a), (b) and (c) are 0.1 to 50 mole %, 50 to 90 mole % and 0.1 to 50 mole % respectively. Preferably, the proportions of the units (a), (b) and (c) are 5 to 40 mole %, 50 to 90 mole % and 5 to 40 mole % respectively. Even more preferably, the proportions of the units (a), (b) and (c) are 10 to 30 mole %, 50 to 70 mole % and 10 to 30 mole % respectively.

Although the admixtures described in the international patent application WO A-9748656 are useful to maintain the fluidity of the concrete for a reasonable period of time (around two hours), they are very much affected by the type of cement used and their working time for placement and finishing operations is relatively long.

The concrete admixture according to the present invention, do not present these drawbacks from the prior art. In particular, the concrete admixture according to the present invention allows optimal flow ability and, at the same time, can maintain a specific consistency, fluidity and workability of the concrete. The concrete admixtures according to the present invention exhibit an earlier working time and, at the same time, maintain the fluidity of the concrete during a long period of time and can work with different cement types, even with blended hydraulic cement, comprising Portland cement and higher percentages of other constituents, like cement types CEM II, III, IV or V (according to EN 197-1). This permits control the quality parameters of the concrete even in different working conditions (temperature, water-cement ratio, etc.) independently of the cement type.

### Summary of the invention

In order to solve the drawbacks from the prior art, the present invention provides a copolymer consisting of, as structural units,
i) 0.1 to 50 mole % of units derived from an ethylenically unsaturated monomer (a) having per one mole thereof 25 to 300 moles of C₂-C₃ oxyalkylene groups;
ii) 0.1 to 49.9 mole % of units derived from a monomer (b) of an alkyl, alkenyl or hydroxyalkyl ester of an ethylenically unsaturated mono- or di-carboxylic acid;
iii) 0.1 to 90 mole % units derived from a monomer (c) selected from the group consisting of an ethylenically unsaturated monocarboxylic acid, a salt thereof, an ethylenically unsaturated dicarboxylic acid, an anhydride thereof and a salt thereof; and
iv) optionally up to 30 mole % of other monomers.

The present invention also provides a method for dispersing a cement mixture, in which the copolymer of the present invention, either alone or in combination with other admixtures, is added to a cement mixture, preferably to a blended hydraulic cement mixture.

The present invention also provides concrete composition comprising cement, aggregates, water and the copolymer of the present invention.

The present invention also provides mortar composition comprising cement, sand, water and the copolymer of the present invention.

### Detailed description of the invention

In the copolymer of the present invention, the ethylenically unsaturated monomer (a) having 25 to 300 moles of C₂-C₃ oxyalkylene groups includes (meth)acrylic esters of C₁-C₄ alkoxypolyalkylene glycols; polyalkylene glycol monoallyl ethers; and adducts of dicarboxylic acids such as maleic anhydride, itaconic anhydride, citraconic anhydride, maleic acid, itaconic acid and citraconic acid, acrylamide and acrylalkylamide with C₂-C₃ oxyalkylene groups. Preferable examples of the monomer (a) include those represented by the following general formula (I): 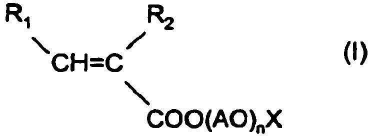 wherein R1 and R2 are each hydrogen atom or methyl, AO is a C₂-C₃ oxyalkylene group, n is a number of 25 to 300 and X is hydrogen atom or a C₁-C₃ alkyl group.

Monomer (a) is produced by methods known by the skilled in art. Usually, an alcohol represented by the formula R-OH, where R represents an alkyl group having from 1 to 22 carbon atoms, a phenyl group or an alkylphenyl group having from 1 to 22 carbon atoms, is alkoxylated, preferably with ethylene oxide and/or propylene oxide, using appropriate catalysts under a temperature in the range of 80-155°C. Said alkoxylated alcohol is esterified with a carboxylic acid such as acrylic acid, methacrylic acid, crotonic acid, maleic acid, itaconic acid, citraconic acid and fumaric acid and salts thereof.

Specific examples of the monomer (a) represented by the above formula (I) include acrylic and methacrylic esters of polyalkylene glycols blocked with an alkyl group at one end such as methoxypolyethylene glycol, methoxypolyethylenepolypropylene glycol, ethoxypolyethylene glycol, ethoxypolyethylenepolypropylene glycol, propoxypolyethylene glycol and propoxypolyethylenepolypropylene glycol; and adducts of acrylic and methacrylic acids with ethylene oxide and propylene oxide.

The molar addition number of the oxyalkylene group is 25 to 300. When both ethylene oxide and propylene oxide are used, the copolymer may take any form of random addition, block addition and alternating addition. It is preferable from the viewpoint of not causing any retardation of the hardening of concrete that the number of the oxyalkylene group is 50 or above, particularly 80 or above. When the number exceeds 300, not only the polymerizability of the monomer will be poor but also the resulting copolymer will be poor in the dispersing effect.

Preferable examples of alkyl, alkenyl or hydroxyalkyl ester of an ethylenically unsaturated mono- or di-carboxylic acid to be used as the monomer (b) in the present invention, which is different from monomer (a), include unsaturated monocarboxylate ester represented by, e.g., the following general formula (II): 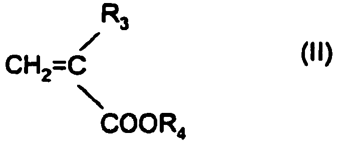 wherein R₃ is hydrogen atom or methyl and R₄ is a C₁-C₁₈ alkyl or C₂-C₁₈ alkenyl group or a C₂-C₆ hydroxyalkyl group.

Specific examples of the monomer (b) include C₁-C₁₈ linear and branched alkyl (meth)acrylates; C₁-C₁₈ linear and branched alkenyl (meth)acrylates; C₂-C₆ hydroxyalkyl (meth)acrylates; di(C₁-C₁₈ linear and branched alkyl) esters of maleic acid, fumaric acid, itaconic acid and citraconic acid; and di(C₁-C₁₈ linear and branched alkenyl) esters of maleic acid, fumaric acid, itaconic acid and citraconic acid. It is particularly preferable with regard to the solubility of the copolymer in water that R₄ in the above general formula (II) be one having 1 to 4 carbon atoms, though R₄ is not particularly limited in the form but may be any of linear and branched ones.

In the copolymer of the present invention, the monomer (c) is an ethylenically unsaturated monocarboxylic acid or a salt thereof, or an ethylenically unsaturated dicarboxylic acid or an anhydride or salt thereof, and can be represented by, e.g., the following general formula (III): 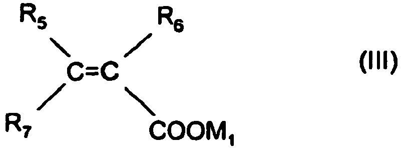 wherein M₁ is hydrogen atom, an alkali metal, an alkaline earth metal, ammonium, an alkylammonium or a substituted alkylammonium group; R₅ and R₇ are each hydrogen atom, methyl or (CH₂)m₂COOM₂; R₆ is hydrogen atom or methyl; M₂ has the same definition as M₁; m₂ is 0 or 1.

Specific examples of the monomer (c) to be used include monocarboxylic acid monomers such as acrylic acid, methacrylic acid and crotonic acid and salts thereof with alkali metals, ammonium, amines and substituted amines; and unsaturated dicarboxylic acid monomers such as maleic acid, itaconic acid, citraconic acid and fumaric acid and salts thereof with alkali metals, alkaline earth metals, ammonium, amines and substituted amines.

Further, the copolymer may contain other co-monomers, as far as the effects of the present invention are not adversely affected, in a maximum amount of 30 mole %, preferably 20 mole %, more preferably 5 mole % Examples of such co-monomers include vinyl acetate, styrene, vinyl chloride, acrylonitrile, methallylsulfonic acid, acrylamide, methacrylamide and styrenesulfonic acid. Most preferred are copolymers that essentially consist of structural units derived from the monomers (a), (b), and (c).

The copolymer according to the present invention is excellent in the effect of maintaining the slump, preferably when the proportions of the units (a), (b) and (c) are 0.1 to 50 mole %, 0.1 to 49.9 mole % and 0.1 to 90 mole % respectively. In particular, when the proportions of the units (a), (b) and (c) are 1 to 30 mole %, 5 to 45 mole % and 10 to 90 mole %, respectively, even more preferred, when the proportions of the units (a), (b) and (c) are 5 to 20 mole %, 10 to 40 mole % and 25 to 80 mole %, respectively, the resulting copolymer exhibits almost no fluidity loss and shows shorter working time independently of the type of concrete used.

The copolymer according to the present invention can be prepared by known processes, e.g. solution polymerization as described in WO-A-9748656. That is, the copolymer can be prepared by polymerising the monomers (a), (b) and (c) in a suitable solvent at the above-described reacting ratio.

The solvent to be used in the solution polymerization includes water, methyl alcohol, ethyl alcohol, isopropyl alcohol, benzene, toluene, xylene, cyclohexane, n-hexane, ethyl acetate, acetone, methyl ethyl ketone and so on. It is preferable from the viewpoints of manageability and reaction equipment to use water, methyl alcohol, ethyl alcohol and isopropyl alcohol.

Examples of the polymerization initiator usable in an aqueous medium include ammonium and alkali metal salts of persulfuric acid; hydrogen peroxide; and water-soluble azo compounds such as 2,2'-azobis(2-amidinopropane) dihydrochloride and 2,2'-azobis(2-methylpropionamide) dehydrate. Examples of the polymerization initiator usable in conducting the solution polymerization in a non-aqueous medium include peroxides such as benzoyl peroxide and lauroyl peroxide; and aliphatic azo compounds such as azobisisobutyronitrile.

A polymerization accelerator such as sodium hydrogensulfite and amine compounds may be used simultaneously with the polymerization initiator. Further, a chain transfer agent such as 2-mercaptoethanol, mercaptoacetic acid, 1-mercaptoglycerin, mercaptosuccinic acid or alkylmercaptan may be simultaneously used for the purpose of controlling the molecular weight.

It is preferable that the copolymer according to the present invention has a weight-average molecular weight (Mw) of 8,000 to 1,000,000, still preferably 10,000 to 300,000 (in terms of polyethylene glycol as determined by gel permeation chromatography). When the molecular weight is too large, the copolymer will be poor in the dispersing property, while when it is too small, the copolymer will be poor in the property of maintaining the slump.

The molecular weight is essentially determined by the polymerisation degree (i.e. the total sum of structural units of monomers (a), (b) and (c) in the backbone) and the alkoxylation degree of monomer (a). The higher the alkoxylation degree of monomer (a), the lower is preferably the polymerisation degree in the backbone. Preferred ranges are indicated in the following table:

| | | | |
|---|---|---|---|
| alkoxylation degree (mole) | 25-100 | 100-200 | 200-300 |
| Backbone (mole) | 200-50 | 50-25 | 25-15 |

It is preferable that the amount of the copolymer as 100% active matter added to concrete and/or mortar be 0.02 to 1.0% by weight, still preferably 0.05 to 0.5% by weight based on cement in terms of solid matter.

A concrete and/or mortar admixture composition comprising the copolymer of the present invention also forms part of the present invention. Said admixture composition may further contain at least one superplasticizer, other than the copolymer according to the invention, selected from the group consisting of naphthalene derivatives, melamine derivatives, aminosulfonic acid derivatives, polycarboxylate-based superplasticizers and polyether-based superplasticizers.

Examples of superplasticizer agents include naphthalene derivatives such as Mighty 150 (a product of Kao Corporation), melamine derivatives such as Mighty 150V-2 (a product of Kao Corporation), amino-sulfonic acid derivatives such as Paric FP (a product of Fujisawa Chemicals), and polycarboxylic acid derivatives such as Mighty 2000WHZ (a product of Kao Corporation). Among these known superplasticizer agents, it is particularly preferred to use Mighty 21EG, Mighty 21ES and Mighty 21ER (products of Kao Chemicals GmbH) which are copolymers prepared by copolymerizing a polyalkylene glycol monoester monomer, wherein the polyalkylene glycol moiety is composed of 110 to 300 moles of oxyalkylene groups having 2 to 3 carbon atoms, with an acrylic acid monomer. It is also particularly preferred to use the copolymers described in WO-A-9748656.

It is preferable from the viewpoint of maintaining the fluidity that the weight ratio of the copolymer of the present invention to the superplasticizers lies between 10:90 and 90:10.

The admixture composition of the present invention may be used in combination with other known additives. Examples of such additives include an air entraining agent, an water-reducing agent, a plasticizer, a retarding agent, an early-strength enhancer, an accelerator, a foaming agent, a blowing agent, an antifoaming agent, a thickener, a waterproofing agent, a defoaming agent, quartz sand, blast furnace slag, fly ash, silica fume, lime stone and so on.

The admixture of the present invention can be added either alone or in combination with other additives to a cement mixture, preferably to blended hydraulic cements, said blended hydraulic cements comprising preferably from 5-95% of cement and from 5-95% wt% of other constituents. Examples of the cement mixture include Portland-slag cement (CEM II/A-S and CEM II/B-S), Portland-silica fume cement (CEM II/A-D), Portland-pozzolana cement (CEM II/A-P, CEM II/B-P, CEM II/A-Q and CEM II/B-Q), Portland-fly ash cement (CEM II/A-V, CEM II/B-V, CEM II/A-W and CEM II/B-W), Portland-burnt shale cement (CEM II/A-T and CEM II/B-T), Portland-limestone cement (CEM II/A-L, CEM II/A-LL, CEM II/B-L and CEM II/B-LL), Portland-composite cement (CEM II/A-M and CEM II/B-M), Blast furnace cement (CEM III/A, CEM III/B and CEM III/C), Pozzolanic cement (CEM IV/A and CEM IV/B), and Composite cement (CEM V/A and CEM V/B).

The invention also provides a method for dispersing a cement mixture, which comprises adding to a cement mixture, preferably to blended hydraulic cements, an admixture composition of the present invention either alone or in combination with other additives.

The present invention also provides concrete composition comprising cement, aggregates, water and the admixture composition of the present invention, either alone, or in combination with other additives.

The present invention also provides mortar composition comprising cement, sand, water and the admixture composition of the present invention, either alone, or in combination with other additives.

The following examples are given in order to provide a person skilled in the art with a sufficiently clear and complete explanation of the present invention, but should not be considered as limiting of the essential aspects of its subject, as set out in the preceding portions of this description.

### Examples

The weight-average molecular weights (Mw) of copolymers indicated in the examples are determined by gel permeation chromatography (GPC) in terms of polyethylene glycol.

### Example 1 (Admixture C-1)

Water (211 mole) was charged into a reactor equipped with a stirrer, and the resulting system was purged with nitrogen under stirring, followed by heating to 75°C in a nitrogen atmosphere. A solution comprising 0.05 mole of methoxypolyethylene glycol methacrylate (having 280 mole on overage of ethylene oxide), 0.4 mole of ethyl acrylate and 0.55 mole of acrylic acid, a 20 wt.% aqueous solution of ammonium persulfate (0.05 mole) (1) and a 20 wt.% aqueous solution of 2-mercaptoethanol (0.1 mole) were separately and simultaneously dropped into the reactor in 2 hours. Then, a 20 wt.% aqueous solution of ammonium persulfate (0.02 mole) (2) was dropped into the reactor in 30 minutes. The resulting mixture was aged at that temperature (75°C) for 1 hour and thereafter heated to 95°C. 35 wt.% aqueous solution of hydrogen peroxide (0.2 mole) was dropped into the resulting mixture in 30 minutes and the mixture thus obtained was aged at that temperature (95°C) for 2 hours. After the completion of the aging, 48 wt.% aqueous solution of sodium hydroxide (0.39 mole) was added to the mixture. Thus, a copolymer having a weight average molecular weight of 130,000 was obtained.

In the same manner as before, but with the reaction conditions indicated in Table 1 and Table 2, copolymers according to the invention and comparative experiments were prepared.

A summary of the monomers used for preparing the copolymers according to the invention and comparative examples is presented in Table 3 and Table 4.

**Table 1 - Reaction conditions - copolymers according to the invention**

| | Water (mole) | ammonium persulfate (mole) | | 2-mercapto-ethanol (mole) | H₂O₂ (mole) | NaOH (mole) | Mw (weight average) |
|---|---|---|---|---|---|---|---|
| | | (1) | (2) | | | | |
| C-1 | 211 | 0.05 | 0.02 | 0.10 | 0.20 | 0.39 | 130,000 |
| C-2 | 72 | 0.05 | 0.02 | 0.10 | 0.20 | 0.32 | 62,000 |
| C-3 | 45 | 0.05 | 0.02 | 0.08 | 0.20 | 0.35 | 55,000 |
| C-4 | 60 | * | 0.02 | 0.08 | 0.15 | 0.39 | 65,000 |
| C-5 | 50 | 0.05 | 0.02 | 0.08 | 0.20 | 0.46 | 55,000 |
| C-6 | 102 | 0.05 | 0.02 | 0.04 | 0.20 | 0.42 | 115,000 |
| C-7 | 54 | 0.05 | 0.02 | 0.08 | --- | 0.15 | 34,000 |
| C-8 | 32 | 0.05 | 0.01 | 0.08 | 0.02 | 0.18 | 37,000 |
| C-9 | 56 | 0.05 | 0.02 | 0.08 | 0.20 | 0.35 | 85,000 |
| C-10 | 56 | 0.05 | 0.02 | 0.08 | 0.20 | 0.35 | 83,500 |
| C-11 | 56 | 0.05 | 0.02 | 0.08 | 0.20 | 0.35 | 82,000 |

| | | | | | | | |
|---|---|---|---|---|---|---|---|
| *0.02 mole of 2,2'-azobis(2-amidinopropane) dihydrochloride | | | | | | | |

**Table 2 - Reaction conditions - Copolymers - comparative examples**

| | Water (mole) | ammonium persulfate (mole) | | 2-mercapto-ethanol (mole) | H₂O₂ (mole) | NaOH (mole) | Mw (weight average) |
|---|---|---|---|---|---|---|---|
| | | (1) | (2) | | | | |
| CE-1 | 30 | 0.10 | 0.01 | 0.06 | 0.1 | 0.35 | 58,000 |
| CE-2 | 45 | 0.05 | 0.02 | 0.08 | --- | 0.15 | 57,000 |
| CE-3 | 135 | 0.03 | 0.01 | 0.05 | 0.1 | 0.35 | 120,000 |
| CE-4 | 32 | 0.05 | 0.01 | 0.08 | 0.2 | 0.04 | 41,000 |
| CE-5 | 56 | 0.05 | 0.02 | 0.08 | 0.2 | 0.35 | 86,000 |

**Table 3 - Copolymers according to the invention**

| | Monomer (a) | | | | Monomer (b) | | Monomer (c) | |
|---|---|---|---|---|---|---|---|---|
| | Mole % | Kind | EO units | PO units | Mole % | Kind | Mole % | Kind |
| C-1 | 5 | PEM | 280 | | 40 | EA | 55 | AAC |
| C-2 | 10 | PEM | 185 | | 45 | MA | 45 | MAC |
| C-3 | 10 | PEM | 130 | | 40 | MA | 50 | MAC |
| C-4 | 15 | PEM | 125 | | 30 | MMA | 55 | AAC |
| C-5 | 15 | PEM | 118 | 15 | 20 | HEA | 65 | AAC |
| C-6 | 20 | PEM | 130 | | 20 | HEA | 60 | AAC |
| C-7 | 25 | Allyl alcohol | 120 | | 25 | MA | 50 | Maleic acid, sodium salt |
| C-8 | 35 | PEM | 28 | | 40 | MMA | 25 | MAA |
| C-9 | 25 | PEM | 130 | | 49 | EA | 26 | MAC |
| C-10 | 25 | PEM | 130 | | 40 | EA | 35 | MAC |
| C-11 | 25 | PEM | 130 | | 30 | EA | 45 | MAC |

**Table 4 - Copolymers - comparative examples**

| | Monomer (a) | | | | Monomer (b) | | Monomer (c) | |
|---|---|---|---|---|---|---|---|---|
| | Mole % | Kind | EO units | PO units | Mole % | Kind | Mole % | Kind |
| CE-1 | 10 | PEM | 9 | | 40 | MA | 50 | MAC |
| CE-2 | 10 | PEM | 130 | | 70 | MA | 20 | MAC |
| CE-3 | 25 | PEM | 350 | | 25 | MA | 50 | MAC |
| CE-4 | 35 | PEM | 28 | | 60 | MMA | 5 | MAC |
| CE-5 | 25 | PEM | 130 | | 55 | EA | 20 | MAC |

| | |
|---|---|
| AAC = Acrylic Acid | MA = Methyl Acrylate |
| EA = Ethyl Acrylate | MAC = Methacrylic Acid |
| HEA = Hydroxyethyl Acrylate | MMA = Methyl Methacrylate |
| PEM = Methoxypolyethylenglycol methacrylate | |

The tests were carried out with following components:
- Cement type:
   a) CEM I 42.5 R from Zementwerke AG, Geseke cement plant in Germany (Portland cement)
   b) CEM II/A-M 42.5 N from Lafarge, Mannersdorf cement plant in Austria (Portland-composite having from 6-20% of other main constituents)
- Sand 0/4 (having a grain size of less than 4 mm), region Markgraneusiedel (MGN), Niderösterreich (Austria)
- Water (tap water from Emmerich am Rhein, Germany) Mortar mix design (per batch) is as follows;
- Cement 450 g
- Sand 1350 g
- Water 225 g
Water/Cement (%)= 0.50

The materials specified above and each admixture were mixed in a 4 L capacity mortar mixer (model ZZ 30 from Zyklos Mischtechnik GmbH) at 140 r.p.m. for 2 minutes.

Copolymers according to the invention (C-1 to C-11) and comparative examples (CE-1 to CE-5) were evaluated by using the Japanese Industrial Standard JIS R 5201:1997 (mortar flow test).

The results are given in Table 5 and Table 6.

**Table 5 - Cement type a: CEM I 42.5 R**

| | Dosage (%)* | Mortar Flow (mm) | | | | |
|---|---|---|---|---|---|---|
| | | just after | after 15min | After 30min | after 60min | after 90min |
| C-1 | 0.16 | 245 | 248 | 245 | 242 | 240 |
| C-2 | 0.16 | 240 | 245 | 243 | 243 | 242 |
| C-3 | 0.15 | 243 | 242 | 242 | 240 | 240 |
| C-4 | 0.16 | 235 | 237 | 239 | 237 | 234 |
| C-5 | 0.14 | 250 | 258 | 259 | 257 | 256 |
| C-6 | 0.15 | 250 | 253 | 258 | 254 | 252 |
| C-7 | 0.15 | 238 | 239 | 240 | 238 | 236 |
| C-8 | 0.16 | 231 | 233 | 237 | 240 | 243 |
| C-9 | 0.16 | 232 | 235 | 238 | 240 | 238 |
| C-10 | 0.16 | 242 | 240 | 238 | 237 | 234 |
| C-11 | 0.15 | 235 | 232 | 230 | 230 | 228 |
| | | | | | | |
| CE-1 | 0.20 | 238 | 217 | 201 | 181 | 158 |
| CE-2 | 0.21 | 240 | 242 | 236 | 230 | 227 |
| CE-3 | 0.28 | 239 | 218 | 207 | 186 | 167 |
| CE-4 | 0.54 | 241 | 216 | 198 | 176 | 155 |
| CE-5 | 0.22 | 235 | 230 | 228 | 234 | 238 |

**Table 6 - Cement type b: CEM II/A-M 42.5 N**

| | Dosage (%)* | Mortar Flow (mm) | | | | |
|---|---|---|---|---|---|---|
| | | just after | after 15min | After 30min | after 60min | after 90min |
| C-1 | 0.11 | 243 | 245 | 243 | 239 | 238 |
| C-2 | 0.11 | 238 | 242 | 240 | 238 | 237 |
| C-3 | 0.10 | 240 | 241 | 240 | 238 | 237 |
| C-4 | 0.11 | 233 | 235 | 237 | 234 | 231 |
| C-5 | 0.09 | 248 | 256 | 258 | 256 | 254 |
| C-6 | 0.10 | 245 | 248 | 255 | 251 | 249 |
| C-7 | 0.10 | 235 | 237 | 239 | 236 | 234 |
| C-8 | 0.11 | 230 | 232 | 233 | 237 | 238 |
| C-9 | 0.11 | 240 | 242 | 241 | 238 | 235 |
| C-10 | 0.10 | 238 | 238 | 236 | 235 | 233 |
| C-11 | 0.10 | 242 | 240 | 237 | 234 | 234 |
| | | | | | | |
| CE-1 | 0.18 | 233 | 210 | 192 | 177 | 143 |
| CE-2 | 0.17 | 178 | 180 | 185 | 215 | 248 |
| CE-3 | 0.22 | 238 | 216 | 204 | 183 | 162 |
| CE-4 | 0.34 | 165 | 167 | 186 | 198 | 195 |
| CE-5 | 0.16 | 182 | 180 | 188 | 198 | 201 |

| | | | | | | |
|---|---|---|---|---|---|---|
| * wt.% in terms of solid matter (100 % active matter) based on the weight of cement | | | | | | |

As it was evidenced from the results given in Table 5 and 6, it can be concluded that the copolymers of the present invention can maintain the mortar flow (fluidity) during a long period of time and are not affected by the type of cement, i.e. by using blended hydraulic cement (CEM II/A-M 42.5 N). This permits control the quality parameters of the concrete or mortar even in different working conditions (temperature, water-cement ratio, etc.) independently of the cement type.

On the other hand, the comparative experiments, and among them CE-2 (reproduction of example C-13 of WO-A-9748656) and CE-5 (reproduction of example C-6 of WO-A-9748656) are very much affected by the cement type.

## Claims

1. Copolymer consisting of, as structural units,
i) 1 to 30 mole % of units derived from an ethylenically unsaturated monomer (a) having per one mole thereof 80 to 300 moles of C2-C3 oxyalkylene groups;
ii) 5 to 45 mole % of units derived from a monomer (b) of an alkyl, alkenyl or hydroxyalkyl ester of an ethylenically unsaturated mono- or di-carboxylic acid;
iii) 10 to 90 mole % units derived from a monomer (c) selected from the group consisting of an ethylenically unsaturated monocarboxylic acid, a salt thereof, an ethylenically unsaturated dicarboxylic acid, an anhydride thereof and a salt thereof; and
iv) optionally up to 5 mole % of other monomers.

2. Copolymer according claim 1, in which the monomer (a) is selected from the group consisting of
(a-1) an ester product prepared by the reaction between methoxy-polyalkylene glycol having per one mole 25 to 300 moles of C₂-C₃ oxyalkylene groups with acrylic acid or methacrylic acid,
(a-2) a monoallyl ether prepared by the reaction between polyalkylene glycol having per one mole 25 to 300 moles of C₂-C₃ oxyalkylene groups and allyl alcohol, and
(a-3) an adduct prepared by the reaction between maleic anhydride, itaconic anhydride, citraconic anhydride, maleic acid, itaconic acid, citraconic acid, acrylic amide or an acrylicalkyl amide and a polyalkylene glycol having per one mole 25 to 300 moles of C₂-C₃ oxyalkylene groups.

3. Copolymer according claim 1 or 2, in which the monomer (a) is defined by the formula (I): 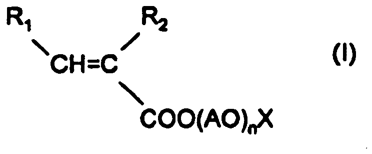 wherein R₁ and R₂ are each hydrogen atom or methyl, AO is a C₂-C₃ oxyalkylene group, n is a number of 25 to 300 and X is hydrogen atom or a C₁-C₃ alkyl group.

4. Copolymer according to claim 3, in which n is a number of 80 to 300.

5. Copolymer according to any of the preceding claims, in which the monomer (b) is an unsaturated monocarboxylate ester having the formula (II): 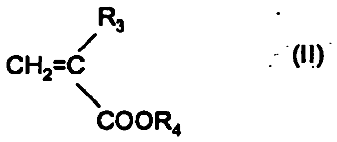 wherein R₃ is hydrogen atom or methyl and R₄ is a C₁-C₁₈ alkyl or alkenyl group or a C₂-C₆ hydroxyalkyl group.

6. Copolymer according to any of the preceding claims, in which the monomer (b) is selected from the group consisting of a maleic diester, a fumaric diester, an itaconic diester and a citraconic diester, each diester is bonded to a C₁-C₁₈, straight or branched, alkyl or alkenyl group.

7. Copolymer according to any of the preceding claims, in which the monomer (c) is defined by the formula (III): 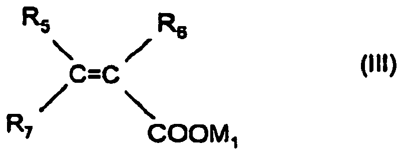 wherein M₁ is hydrogen atom, an alkali metal, an alkaline earth metal, ammonium, an alkylammonium or a substituted alkylammonium group; R₅ and R₇ are each hydrogen atom, methyl or (CH₂)m₂COOM₂; R₆ is hydrogen atom or methyl; M₂ has the same definition as M₁; m₂ is 0 or 1.

8. Copolymer according to any of the preceding claims, wherein the copolymer comprises 5 to 20 mole % of the units (a), 10 to 40 mole % of the units (b) and 25 to 80 mole % of the units (c).

9. Copolymer according to any of the preceding claims, in which the copolymer has a weight average molecular weight (Mw) of 8,000 to 1, 000, 000.

10. A concrete and/or mortar admixture composition comprising the copolymer as defined in claims 1 to 9.

11. Composition according to claim 10 further comprising at least one superplasticizer, other than the copolymer as defined in claims 1 to 9, selected from the group consisting of naphthalene derivatives, melamine derivatives, aminosulfonic acid derivatives, polycarboxylate-based superplasticizers, polyether-based superplasticizers and mixtures thereof.

12. Composition according to claim 11, in which a mixing weight ratio of the copolymer to the superplasticizer/s ranges between 10:90 and 90:10.

13. Method for dispersing a cement mixture which comprises adding to a cement mixture
(i) a copolymer as defined in claims 1 to 9, or
(ii) an admixture composition as defined in claims 10 to 12.

14. Concrete composition comprising cement, aggregates, water and
(i) a copolymer as defined in claims 1 to 9, or
(ii) the admixture composition as defined in claims 10 to 12.

15. Mortar composition comprising cement, sand, water and
(i) a copolymer as defined in claims 1 to 9, or
(ii) the admixture composition as defined in claims 10 to 12.

16. Composition according to claims 14 or 15, which comprises 0.02 to 1.0 percent by weight of the copolymer as a 100% active matter based on solid matter of the cement.

17. Composition according to claims 14 to 16, in which the cement is a blended hydraulic cement.

## Patentansprüche

1. Copolymer bestehend aus, als Struktureinheiten,
i) 1 bis 30 Mol% an Einheiten abgeleitet von einem ethylenisch ungesättigten Monomer (a), das pro einem Mol davon 80 bis 300 Mol an C₂-C₃-Oxyalkylengruppen hat;
ii) 5 bis 45 Mol% aus Einheiten abgeleitet von einem Monomer (b) eines Alkyl-, Alkenyl- oder Hydroxyalkylesters einer ethylenisch ungesättigten Mono- oder Dicarbonsäure;
iii) 10 bis 90 Mol% Einheiten abgeleitet von einem Monomer (c), das aus der Gruppe ausgewählt ist, die aus einer ethylenisch ungesättigten Monocarbonsäure, einem Salz davon, einer ethylenisch ungesättigten Dicarbonsäure, einem Anhydrid davon oder einem Salz davon besteht; und
iv) optional bis zu 5 Mol% aus anderen Monomeren.

2. Copolymer gemäß Anspruch 1, in dem das Monomer (a) aus der Gruppe ausgewählt ist, die besteht aus
(a-1) einem Esterprodukt, hergestellt durch die Umsetzung zwischen Methoxypolyalkylenglycol mit 25 bis 300 Mol an C₂-C₃-Oxyalkylengruppen pro Mol mit Acrylsäure oder Methacrylsäure,
(a-2) einem Monoallylether, hergestellt durch Umsetzung von Polyalkylenglycol mit 25 bis 300 Mol an C₂-C₃-Oxyalkylengruppen pro Mol und Allylalkohol, und
(a-3) einem Addukt, hergestellt durch Umsetzung von Maleinanhydrid, Itaconanhydrid, Citraconanhydrid, Maleinsäure, Itaconsäure, Citraconsäure, Acrylamid oder einem Acrylalkylamid und einem Polyalkylenglycol mit 25 bis 300 Mol an C₂-C₃-Oxyalkylengruppen pro Mol.

3. Copolymer gemäß Anspruch 1 oder 2, in dem das Monomer (a) durch die Formel (I) definiert ist: 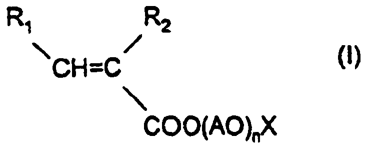 worin R₁ und R₂ jeweils Wasserstoffatom oder Methyl sind, AO eine C₂-C₃-Oxyalkylengruppe ist, n eine Zahl von 25 bis 300 ist und X ein Wasserstoffatom oder eine C₁-C₃-Alkylgruppe ist.

4. Copolymer gemäß Anspruch 3, worin n eine Zahl von 80 bis 300 ist.

5. Copolymer gemäß mindestens einem vorhergehenden Anspruch, in dem das Monomer (b) ein ungesättigter Monocarboxylatester mit der Formel (II) ist: 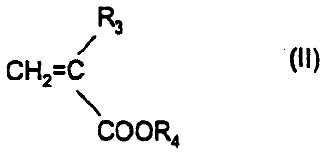 worin R₃ ein Wasserstoffatom oder Methyl ist und R₄ eine C₁-C₁₈-Alkyl- oder Alkenylgruppe oder eine C₂-C₆-Hydroxyalkylgruppe ist.

6. Copolymer gemäß mindestens einem der vorhergehenden Ansprüche, in dem das Monomer (b) aus der Gruppe ausgewählt ist, die aus einem Maleinsäurediester, einem Fumarsäurediester, einem Itaconsäurediester und einem Citraconsäurediester besteht, wobei jeder Diester an eine C₁-C₁₈-geradkettig oder -verzweigte Alkyl- oder Alkenylgruppe gebunden ist.

7. Copolymer gemäß mindestens einem vorhergehenden Anspruch, in dem das Monomer (c) durch die Formel (III) definiert ist: 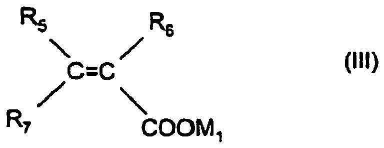 worin M₁ ein Wasserstoffatom, ein Alkalimetall, ein Erdalkalimetall, Ammonium, ein Alkylammonium oder eine substituierte Alkylammoniumgruppe ist; ein R₅ und R₇ jeweils Wasserstoffatom, Methyl oder (CH₂)m₂COOM₂ sind; R₆ Wasserstoffatom oder Methyl ist; M₂ die gleiche Definition wie M₁ hat; m₂ 0 oder 1 ist.

8. Copolymer gemäß mindestens einem vorhergehenden Anspruch, worin das Copolymer 5 bis 20 Mol% der Einheiten (a), 10 bis 40 Mol% der Einheiten (b) und 25 bis 80 Mol% der Einheiten (c) umfasst.

9. Copolymer gemäß mindestens einem vorhergehenden Anspruch, worin das Copolymer ein gewichtsgemitteltes Molekulargewicht (Mw) von 8.000 bis 1.000.000 hat.

10. Beton- und/oder Mörtel-Zumischungszusammensetzung, die das Copolymer, wie in den Ansprüchen 1 bis 9 definiert, umfasst.

11. Zusammensetzung gemäß Anspruch 10, die weiterhin mindestens einen Superplastifizierer außer dem Copolymer, wie in den Ansprüchen 1 bis 9 definiert, umfasst, der aus der Gruppe ausgewählt ist, die aus Naphthalinderivaten, Melaminderivaten, Aminsulfonsäurederivaten, Superplastifizierer auf Polycarboxylat-Basis, Superplastifizierer auf Polyether-Basis und Mischungen davon besteht.

12. Zusammensetzung gemäß Anspruch 11, worin ein Mischungsgewichtsverhältnis des Copolymers zu dem oder den Superpastifizierern zwischen 10:90 und 90:10 liegt.

13. Verfahren zum Dispergieren einer Zementmischung, das das Hinzufügen
(i) eines Copolymers wie in Ansprüchen 1 bis 9 definiert, oder
(ii) einer Zumischzusammensetzung wie in Ansprüchen 10 bis 12 definiert
Zu einer Zementmischung umfasst.

14. Betonzusammensetzung, umfassend Zement, Aggregate, Wasser und
(i) ein Copolymer wie in Ansprüchen 1 bis 9 definiert, oder
(ii) die Zumischungszusammensetzung wie in Ansprüchen 10 bis 12 definiert.

15. Mörtelzusammensetzung, umfassend Zement, Sand, Waser und
(i) ein Copolymer wie in Ansprüchen 1 bis 9 definiert, oder
(ii) die Zumischungszusammensetzung wie in Ansprüchen 10 bis 12 definiert.

16. Zusammensetzung gemäß Anspruch 14 oder 15, die 0,01 bis 1,0 Gew.%& des Copolymers als 100% aktives Material auf Basis des Feststoffs des Zements umfasst.

17. Zusammensetzung gemäß Ansprüche 14 bis 16, worin der Zement ein gemischter hydraulischer Zement ist.

## Revendications

1. Copolymère se composant, sous forme d'unités structurelles,
i) de 1 à 30 % en moles d'unités dérivées d'un monomère éthyléniquement insaturé (a) ayant, par mole de celui-ci, 80 à 300 moles de groupes oxyalkylène en C₂-C₃ ;
ii) 5 à 45 % en moles d'unités dérivées d'un monomère (b) d'un ester alkyle, alcényle ou hydroxyalkyle d'un acide mono- ou di-carboxylique éthyléniquement insaturé ;
iii) 10 à 90 % en moles d'unités dérivées d'un monomère (c) choisi dans le groupe se composant d'un acide monocarboxylique éthyléniquement insaturé, d'un sel de celui-ci, d'un acide dicarboxylique éthyléniquement insaturé, d'un anhydride de celui-ci et d'un sel de celui-ci ; et
iv) éventuellement jusqu'à 5 % en moles d'autres monomères.

2. Copolymère selon revendication 1, dans lequel le monomère (a) est choisi dans le groupe se composant de
(a-1) un produit d'ester préparé par la réaction entre un méthoxy-polyalkylène glycol ayant, par mole, 25 à 300 moles de groupes oxyalkylène en C₂-C₃ avec de l'acide acrylique ou de l'acide méthacrylique,
(a-2) un éther monoallylique préparé par la réaction entre un polyalkylène glycol ayant, par mole, 25 à 300 moles de groupes oxyalkylène en C₂-C₃ et l'alcool allylique, et
(a-3) un adduit préparé par la réaction entre l'anhydride maléique, l'anhydride itaconique, l'anhydride citraconique, l'acide maléique, l'acide itaconique, l'acide citraconique, l'amide acrylique ou un acrylicalkyl amide et un polyalkylène glycol ayant, par mole, 25 à 300 moles des groupe oxyalkylène en C₂-C₃.

3. Copolymère selon la revendication 1 ou 2, dans lequel le monomère (a) est défini par la formule (I) 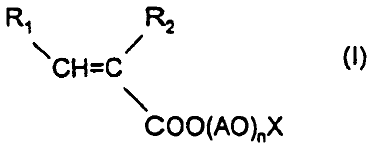 où R₁ et R₂ sont chacun un atome d'hydrogène ou un méthyle, AO est un groupe oxyalkylène en C₂-C₃, n est un nombre de 25 à 300 et X est un atome d'hydrogène ou un groupe alkyle en C₁-C₃.

4. Copolymère selon la revendication 3, dans lequel n est un nombre de 80 à 300.

5. Copolymère selon l'une des revendications précédentes, dans lequel le monomère (b) est un ester de monocarboxylate insaturé ayant la formule (II) : 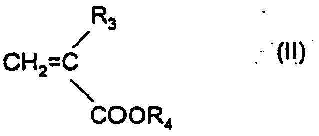 où R₃ est un atome d'hydrogène ou un méthyle et R₄ est un groupe alkyle ou alcényle en C₁-C₁₈ ou un groupe hydroxyalkyle en C₂-C₆.

6. Copolymère selon l'une des revendications précédentes, dans lequel le monomère (b) est choisi dans le groupe se composant d'un diester maléique, d'un diester fumarique, d'un diester itaconique et d'un diester citraconique, chaque diester est lié à un groupe alkyle ou alcényle, linéaire ou ramifié, en C₁-C₁₈.

7. Copolymère selon l'une des revendications précédentes, dans lequel le monomère (c) est défini par la formule (III) : 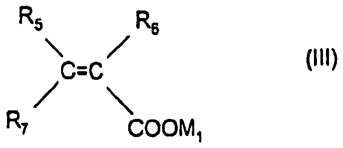 où M₁ est un atome d'hydrogène, un métal alcalin, un métal alcalino-terreux, de l'ammonium, un alkylammonium ou un groupe alkylammonium substitué ; R₅ et R₇ sont chacun un atome d'hydrogène, un méthyle ou un (CH₂)m₂COOM₂ ; R₆ est un atome d'hydrogène ou un méthyle ; M₂ a la même définition que M₁ ; m₂ est 0 ou 1.

8. Copolymère selon l'une des revendications précédentes, dans lequel le copolymère comprend de 5 à 20 % en moles des unités (a), de 10 à 40 % en moles des unités (b) et de 25 à 80 % en moles des unités (c).

9. Copolymère selon l'une des revendications précédentes, dans lequel le copolymère a un poids moléculaire moyen pondéral (Mw) de 8000 à 1000000.

10. Composition d'adjuvants de béton et/ou de mortier comprenant le copolymère tel que défini dans les revendications 1 à 9.

11. Composition selon la revendication 10 comprenant en outre au moins un superplastifiant, autre que le copolymère tel que défini dans les revendications 1 à 10, sélectionné dans le groupe se composant de dérivés de naphtalène, de dérivés de mélamine, de dérivés d'acide aminosulfonique, de superplastifiants à base de polycarboxylate, de superplastifiants à base de polyéther et de leurs mélanges.

12. Composition selon la revendication 11, dans laquelle un rapport des poids de mélange du copolymère au(x) superplastifiant(s) se trouve dans la plage allant de 10:90 à 90:10.

13. Procédé de dispersion d'un mélange de ciment qui comprend le fait d'ajouter à un mélange de ciment
(i) un copolymère tel que défini dans les revendications 1 à 9, ou
(ii) une composition d'adjuvants telle que définie dans les revendications 10 à 12.

14. Composition de béton comprenant du ciment, des granulats, de l'eau et
(i) un copolymère tel que défini dans les revendications 1 à 9, ou
(ii) la composition d'adjuvants telle que définie dans les revendications 10 à 12.

15. Composition de mortier comprenant du ciment, du sable, de l'eau et
(i) un copolymère tel que défini dans les revendications 1 à 9, ou
(ii) la composition d'adjuvants telle que définie dans les revendications 10 à 12.

16. Composition selon les revendications 14 ou 15, qui comprend 0,02 à 1,0 % en poids du copolymère comme 100 % de matières actives basée sur les matières solides du ciment.

17. Composition selon les revendications 14 à 16, dans laquelle le ciment est un ciment hydraulique mélangé.
